# EUROPÄISCHE PATENTSCHRIFT

(11) **EP 1 883 491 B1**
(45) Veröffentlichungstag und Bekanntmachung des Hinweises auf die Patenterteilung: **16.09.2009**
(21) Anmeldenummer: 06742270.9
(22) Anmeldetag: 26.04.2006
(51) Int. Cl.: B23K 26/24, B23K 26/32, B23K 33/00, H05B 41/02, H01R 33/06, B23K 101/34, B23K 101/36, B23K 103/04

(54) **BAUTEIL MIT EINEM EINEN VORSPRUNG AUFWEISENDEN SCHWEISSBUCKEL**
COMPONENT WITH A WELD PROJECTION HAVING A PROJECTION
ELEMENT COMPRENANT UNE PROTUBERANCE DE SOUDAGE PRESENTANT UNE SAILLIE

(30) Priorität: 27.04.2005 DE 102005019927
(43) Veröffentlichungstag der Anmeldung: 06.02.2008
(73) Patentinhaber: Osram Gesellschaft mit beschränkter Haftung, 81543 München (DE)
(72) Erfinder: MITTLER, Bodo, 86391 Stadtbergen (DE); SCHMIDT-LEHMANN, Thomas, 14532 Kleinmachnow (DE)
(86) Internationale Anmeldenummer: PCT/DE2006/000727
(87) Internationale Veröffentlichungsnummer: WO 2006/114088

(56) Entgegenhaltungen:
- EP-A- 1 516 691
- WO-A-20/05035179
- US-B1- 6 731 076
- PATENT ABSTRACTS OF JAPAN Bd. 1999, Nr. 05, 31. Mai 1999 (1999-05-31) -& JP 11 047935 A (SEKISUI CHEM CO LTD), 23. Februar 1999 (1999-02-23)
- PATENT ABSTRACTS OF JAPAN Bd. 1996, Nr. 07, 31. Juli 1996 (1996-07-31) -& JP 08 071766 A (ORIGIN ELECTRIC CO LTD), 19. März 1996 (1996-03-19)

## Beschreibung

Die Erfindung betrifft metallisches Bauteil gemäß dem Oberbegriff des Patentanspruchs 1 (siehe, z.B., JP 08/071766).

### Stand der Technik

Das erfindungsgemäße metallische Bauteil kann prinzipiell bei einer Vielzahl unterschiedlicher Schweißverfahren Verwendung finden. Das Hauptanwendungsgebiet des Schweißbuckels dürfte jedoch bei Laserstrahlschweißverfahren, insbesondere zum Verschweißen von zinkbeschichteten Abschirmgehäuseteilen einer Lampe liegen.

Aus dem allgemeinen Stand der Technik ist es bekannt, zur Verbesserung der elektromagnetischen Verträglichkeit (EMV), beispielsweise einer Entladungslampe, Abschirmgehäuse aus verzinktem Stahlblech zu verwenden. Derartige Abschirmgehäuse bestehen aus zwei Gehäuseteilen, die einen Kunststoffsockel der Lampe umschließen und über eine Überlappschweißverbindung verbunden werden. Im Schweißbereich ist eines der Gehäuseteile mit einer Vielzahl etwa halbrunder Schweißbuckel versehen und über diese in Anlage an das zweite Gehäuseteil bringbar. Die beiden Gehäuseteile werden anschließend mittels Laserstrahlschweißen verbunden.

Nachteilig bei derartigen Schweißverbindungen ist, dass es beim Schweißen zu einem explosionsartigen Verdampfen der Zinkbeschichtung der Gehäuseteile und dadurch zu Löchern, Poren und Spritzern im Verbindungsbereich kommen kann. Des Weiteren ist nachteilig, dass die während dem Schweißen entstehende Wärmemenge zu einer Reaktion der Gehäuseteile mit dem Kunststoffgehäuse führt und dadurch die Qualität der Schweißverbindung verschlechtert bzw. die Herstellung der Schweißverbindung unmöglich macht.

### Darstellung der Erfindung

Der Erfindung liegt die Aufgabe zugrunde, ein metallisches Bauteil, insbesondere zum Laserstrahlschweißen zu schaffen, der gegenüber herkömmlichen Lösungen ein Verspritzen von Metallpartikeln verhindert und einen definierten Wärmeeintrag zur Vermeidung einer Reaktion mit dem Kunststoffgehäuse ermöglicht.

Diese Aufgabe wird erfindungsgemäß durch die Merkmale des Anspruchs 1 gelöst. Besonders vorteilhafte Ausführungen der Erfindung sind in den abhängigen Ansprüchen beschrieben.

Das metallische Bauteil hat eine Einprägung, die mit zumindest einem zweiten Bauteil verschweißbar ist. Erfindungsgemäß hat der Schweißbuckel des metallisches Bauteils, einen Vorsprung, über den er zum Verschweißen in Anlage an das zweite Bauteil bringbar ist. Durch den Vorsprung sind die Bauteile während dem Schweißen beabstandet zueinander angeordnet. Das heißt, der Vorsprung des Schweißbuckels liegt während dem Schweißprozess spaltfrei und vorzugsweise mit einem gewissen Druck an dem zweiten Bauteil an, so dass der Abstand zwischen den miteinander zu verschweißenden Bauteilen im Wesentlichen durch die Höhe des Schweißbuckels bzw. seines Vorsprungs bestimmt ist. Diese Lösung ermöglicht ein Austreten von explosionsartig verdampfenden Metallpartikeln aus der Überlappungszone der Bauteile. Dadurch wird ein Druckaufbau zwischen den Bauteilen und damit Löcher, Poren und Spritzer verhindert. Gemäß der Erfindung werden auf metallische Bauteile angewandt, von denen eine Beschichtung aus einem Metall aufweist, das bei der Schweißtemperatur einen höheren Dampfdruck als das Metall besitzt, aus dem das Bauteil besteht. Insbesondere ist die Erfindung vorteilhaft auf Bauteile aus verzinktem Stahlblech anwendbar. Erfindungsgemäß wird durch den Vorsprung eine definierte Wärmeeinbringung in das zweite Bauteil ermöglicht, so dass eine Reaktion mit den innerhalb eines Abschirmgehäuses angeordneten Kunststoffelementen vermieden wird.

Gemäß einem besonders bevorzugten Ausführungsbeispiel hat der Vorsprung zumindest abschnittsweise einen halbkugelförmigen Querschnitt.

Vorzugsweise ist der Vorsprung mittig an einer Außenfläche der Einprägung angeordnet.

Gemäß der Erfindung weist der Vorsprung eine Höhe im Bereich von 0,03 bis 0,15 mm auf.

Die Gesamthöhe des Schweißbuckels liegt gemäß der Erfindung im Bereich von 0,07 bis 0,40 mm.

Bei einer bevorzugten Ausführung der Erfindung wird die Erwärmung zum Schweißen durch hochenergetische Strahlung, vorzugsweise durch Laserstrahlung in eine Innenkontur des Schweißbuckels eingebracht.

Vorzugsweise ist in der Innenkontur der Einprägung eine Ausnehmung zum Einbringen der Laserstrahlung ausgebildet.

Bei einer bevorzugten Ausführung der Erfindung sind die Bauteile aus verzinktem Stahlblech.

### Kurze Beschreibung der Zeichnungen

Nachstehend wird die Erfindung anhand eines bevorzugten Ausführungsbeispiels näher erläutert. Es zeigt:
Figur 1 eine schematische Schnittdarstellung durch das Oberteil des in Figur 2 abgebildeten Abschirmgehäuses im Bereich eines Schweißbuckels.
Figur 2 eine Draufsicht auf ein Abschirmgehäuse für einen Lampensockel

### Bevorzugte Ausführung der Erfindung

Die Erfindung wird im Folgenden anhand eines Schweißbuckels zum Verschweißen von zinkbeschichteten Abschirmgehäuseteilen erläutert. Wie bereits eingangs erwähnt, ist das metallische Bauteil jedoch keinesfalls auf derartige Gehäuseteile beschränkt.

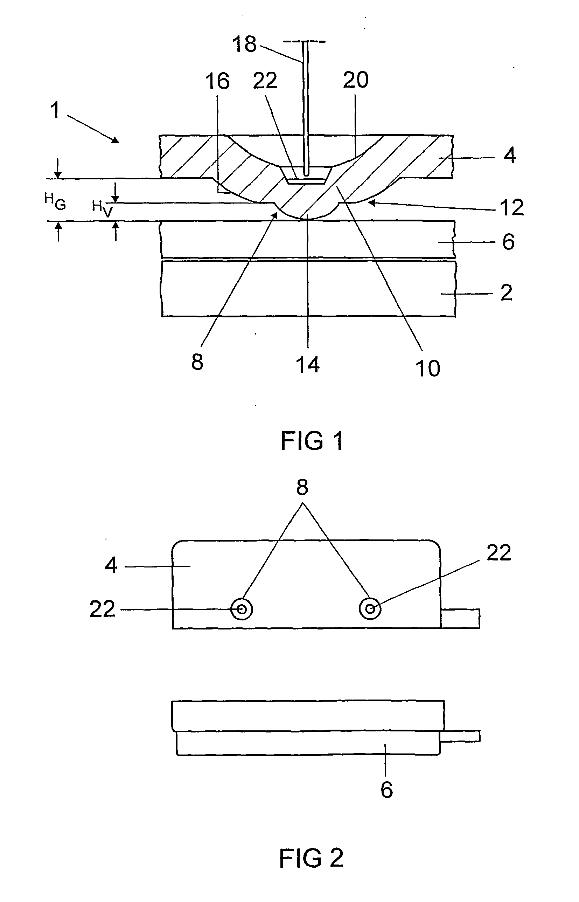

Figur 2 zeigt eine schematische Darstellung eines zweiteiligen, im wesentlichen quaderförmigen Abschirmgehäuses, das einen Lampensockel 2 aus Kunststoff umgibt. Das Oberteil 4 des Abschirmgehäuses ist auf seiner Oberseite mit einem Durchbruch (nicht dargestellt) für das Entladungsgefäß der Hochdruckentladungslampe versehen. Das Unterteil 6 überlappt mit dem Oberteil 4, so dass im Überlappungsbereich die Außenwand des Unterteils 6 im Bereich der Schweißbuckel 8 an der Innenwand des Oberteils 4 anliegt. Details der Hochdruckentladungslampe sind beispielsweise in der WO 00/59269 beschrieben. Das Abschirmgehäuse 1 hat zwei Gehäuseteile 4, 6 aus verzinktem Stahlblech, die in ihrer in Figur 1 dargestellten Überlappungszone mit einer Vielzahl von Schweißbuckeln 8 versehen sind. Aus Gründen der Übersichtlichkeit ist in Figur 1 lediglich einer der Schweißbuckel 8 dargestellt. Dieser hat eine Einprägung 10, die in dem ersten Gehäuseteil 4 ausgebildet ist. Erfindungsgemäß ist an einem dem zweiten Gehäuseteil 6 zugewandten Endabschnitt 12 des Schweißbuckels 8 ein etwa halbkugelförmiger Vorsprung 14 ausgebildet. Dieser ist zum Verschweißen in Anlage an das zweite Gehäuseteil 6 gebracht, wobei die Gehäuseteile 4, 6 durch den Vorsprung 14 voneinander beabstandet angeordnet sind. Erfindungsgemäß kann während dem Schweißen verdampfendes Zink aus der Überlappungszone austreten, so dass eine Druckentwicklung verhindert wird. Dadurch werden Löcher, Poren und Spritzer vermieden und eine Nachbearbeitung der Bauteiloberfläche nach dem Schweißvorgang kann entfallen. Weiterhin wird durch den Vorsprung 14 des Schweißbuckels 8 eine definierte, d.h. lokal eingegrenzte Wärmeeinbringung in das zweite Gehäuseteil 6 ermöglicht, so dass eine übermäßige Erwärmung des zweiten Gehäuseteils 6 und dadurch eine Reaktion mit dem darunter angeordneten Kunststoffsockel 2 vermieden wird. Dadurch wird eine höhere Schweißqualität erreicht und die Korrosionsbeständigkeit im Schweißbereich verbessert. Gemäß Figur 1 ist der Vorsprung 14 etwa mittig an einer Außenfläche 16 der Einprägung 10 angeordnet und hat eine Höhe H_{V} von 0,09 mm, bei einer Gesamthöhe H_{G} des Schweißbuckels 8 von 0,24 mm. Der Schweißbuckel 8 lässt sich in einfacher Weise mit herkömmlichen Prägewerkzeugen in das Bauteil 4 einbringen und ist dadurch kostengünstig herstellbar. Bei dem gezeigten Ausführungsbeispiel erfolgt die Erwärmung auf Schweißtemperatur durch einen Laserstrahl 18, der im Bereich einer Innenkontur 20 des Schweißbuckels 8 eingebracht wird. Die definierte Wärmeeinbringung in die Schweißstelle wird durch eine etwa kegelstumpfförmige Ausnehmung 22 in der Innenkontur 20 der Einprägung 10 weiter verbessert.

Der Schweißbuckel 8 ist nicht auf die beschriebene Fügetechnik mittels Laserstrahlschweißen beschränkt, vielmehr kann jedes aus dem Stand der Technik bekannte Schweißverfahren Verwendung finden, das eine definierte Wärmeeinbringung in den Schweißbereich ermöglicht. Außerdem kann das erfindungsgemäße Verfahren auch auf Bauteile aus anderen Metallen angewendet werden und ist nicht auf verzinkte Stahlbleche beschränkt.

Offenbart ist ein metallisches Bauteil mit einem Schweißbuckel 8, insbesondere zum Laserstrahlschweißen, mit einer Einprägung 10, die in einem ersten Bauteil 4 angeordnet und mit zumindest einem zweiten Bauteil 6 verschweißbar ist. Erfindungsgemäß hat das metallische Bauteil einen Schweißbuckel 8 mit einem Vorsprung 14 und ist zum Verschweißen über diesen in Anlage an das zweite Bauteil 6 bringbar.

## Patentansprüche

1. Metallisches Bauteil (4) mit einem Schweißbuckel mit einer Einprägung (10), die in dem metallischen Bauteil (4) angeordnet ist, wobei der Schweißbuckel (8) einen Vorsprung (14) aufweist und zum Verschweißen über diesen Vorsprung (14) in Anlage an ein zweites metallisches Bauteil (6) bringbar ist, **dadurch gekenntzeichnet, dass** der Schweißbuckel (8) eine Gesamthöhe im Bereich von 0,07 mm bis 0,40 mm besitzt und der Vorsprung (14) eine Höhe im Bereich von 0,03 mm bis 0,15 mm besitzt; und das metallische Bauteil (4) aus einem ersten Metall besteht und mit einer Beschichtung aus einem zweiten Metall versehen ist, das bei der Schweißtemperatur einen höheren Dampfdruck als das erste Metall aufweist.

2. Metallisches Bauteil (4) nach Anspruch 1, wobei der Vorsprung (14) zumindest abschnittsweise einen halbkugelförmigen Querschnitt aufweist.

3. Metallisches Bauteil (4) nach nach einem der vorhergehenden Ansprüche, wobei der Schweißbuckel (8) eine Innenkontur (20) mit einer Ausnehmung (22) aufweist.

4. Metallisches Bauteil (4) nach nach einem der vorhergehenden Ansprüche, wobei das Bauteil (4) aus verzinktem Stahlblech ist.

5. Metallisches Bauteil (4) nach einem der vorhergehenden Ansprüche, wobei das metallische Bauteil (4) als Gehäuseteil einer Lampe ausgebildet ist.

## Claims

1. Metal component (4) with a weld projection with an indent (10), which is arranged in the metal component (4), the weld projection (8) having a protrusion (14) and by means of this protrusion (14) can be brought into contact with a second metal component (6) for the welding, **characterized in that** the weld projection (8) has an overall height in the range from 0.07 mm to 0.40 mm and the protrusion (14) has a height in the range from 0.03 mm to 0.15 mm, and the metal component (4) consists of a first metal and is provided with a coating of a second metal which has a higher vapour pressure than the first metal at the welding temperature.

2. Metal component (4) according to Claim 1, at least a certain portion of the protrusion (14) having a hemispherical cross section.

3. Metal component (4) according to one of the preceding claims, the weld projection (8) having an inner contour (20) with a clearance (22).

4. Metal component (4) according to one of the preceding claims, the component (4) being made of galvanized steel sheet.

5. Metal component (4) according to one of the preceding claims, the metal component (4) being formed as a housing part of a lamp.

## Revendications

1. Elément ( 4 ) métallique comprenant une protubérance de soudage ayant une empreinte ( 10 ) qui est disposée dans l'élément ( 4 ) métallique, la protubérance ( 8 ) de soudage ayant une saillie ( 14 ) et pouvant être pour le soudage mise en contact avec un deuxième élément ( 6 ) métallique, **caractérisé en ce que** la protubérance ( 8 ) de soudage a une hauteur globale dans l'intervalle allant de 0,07 mm à 0,40 mm et la saillie a une hauteur dans l'intervalle allant de 0,03 mm à 0,15 mm et l'élément ( 4 ) métallique est en un premier métal et est muni d'un revêtement en un deuxième métal qui a, à la température de soudage, une tension de vapeur plus grande que le premier métal.

2. Elément ( 4 ) métallique suivant la revendication 1, dans lequel la saillie ( 14 ) a, au moins par partie, une section transversale hémisphérique.

3. Elément ( 4 ) métallique suivant l'une des revendications précédentes, dans lequel la protubérance ( 8 ) de soudage a un contour ( 20 ) intérieur ayant un évidement ( 22 ).

4. Elément ( 4 ) métallique suivant l'une des revendications précédentes, dans lequel l'élément ( 4 ) est une tôle d'acier zinguée.

5. Elément ( 4 ) métallique suivant l'une des revendications précédentes, dans lequel l'élément ( 4 ) métallique est constitué en partie d'enveloppe d'une lampe.
